# EUROPÄISCHE PATENTANMELDUNG

(11) **EP 1 065 597 A2**
(43) Veröffentlichungstag der Anmeldung: **03.01.2001**
(21) Anmeldenummer: 00113817.1
(22) Anmeldetag: 29.06.2000
(51) Int. Cl.: G06F 12/14

(54) **Verfahren zum Erkennen von fehlerhaften Speicherzugriffen in prozessorgesteuerten Einrichtungen**

(30) Priorität: 30.06.1999 DE 19930144
(71) Anmelder: SIEMENS AKTIENGESELLSCHAFT, 80333 München (DE)
(72) Erfinder: Schicklinski, Peter, 81477 München (DE)

(57) **Zusammenfassung**

Für eine Realisierung eines Prozesses wird diesem in einem Speicher (RAM) der Einrichtung (PBX) ein prozeßindividueller Speicherbereich (SB-A, SB-B, SB-C) zugeordnet. In den prozeßindividuellen Speicherbereich (SB-A, SB-B, SB-C) werden eine signifikante Start- und eine signifikante Endesignatur (SS; ES) eingefügt und prozeßindividuelle Informationen in einem weiteren Speicherbereich (I-SP) gespeichert. Bei einem Freigeben des prozeßindividuellen Speicherbereiches (SB-A, SB-B, SB-C) werden die aktuellen Signaturen (SS, ES) jeweils mit den ursprünglich eingefügten Signaturen (SS, ES) verglichen und in Fällen, in denen die aktuellen Signaturen (SS, ES) nicht mit den ursprünglich eingefügten Signaturen (SS, ES) übereinstimmen werden die prozeßindividuellen Informationen an eine Fehlerroutine übergeben.

## Beschreibung

In prozessorgesteuerten Einrichtungen, z.B. in einer Kommunikationsanlage, ist eine möglichst umfangreiche Auswertung von Ausnahmesituationen für die Qualität einer derartigen Einrichtung von großer Bedeutung. Ausnahmesituationen können dabei beispielsweise Fehler sein, die bei einem unberechtigten bzw. fehlerhaften Speicherzugriff durch den Prozessor der Einrichtung auftreten. Bei einem Auftreten einer Ausnahmesituation wird in der Regel das die Ausnahmesituation auslösende Ereignis und der aktuelle Zustand der Einrichtung mittels einer Fehlerroutine so genau wie möglich aufgezeichnet und zugehörige Informationen in einem Speicher der Einrichtung gespeichert. Anschließend ist über einen sogenannten 'Remote'-Zugang der Einrichtung, z.B. eine V.24-Schnittstelle, eine Lokalisierung des Problems möglich ohne den normalen Betrieb der Einrichtung zu stören.

Um derartige unberechtigte bzw. fehlerhafte Speicherzugriffe durch den Prozessor erkennen und unterbinden zu können verfügen teure Prozessoren über eine spezielle Hardwareüberwachung. Beispielsweise ist aus der Produktschrift "iAPX 286 - Operating Systems", der Firma Intel, 1983, insbesondere der Seiten 2-1 bis 2-22, eine Hardwareüberwachung bekannt, durch welche der Prozessor mittels eines in einen 'Selektor' und einen 'Offset' aufgeteilten Zeigers und einer Deskriptorentabelle Speicherzugriffe außerhalb eines zulässigen Speicherbereiches eigenständig erkennt. Dieser Überwachungsmodus wird in der Literatur häufig als 'Protection Mode' bezeichnet.

Kostengünstigere Prozessoren - wie z.B. Prozessoren der Firma Motorola (680xx-Familie) - oder Microcontroller - wie z.B. der Microcontroller 80C166 der Firma Siemens - verfügen dagegen nicht über eine derartige Hardwarüberwachung. Ein Erkennen und Auswerten von unberechtigten bzw. fehlerhaftem Speicherzugriffen ist somit zum Teil gar nicht oder nur mit hohem Aufwand möglich.

Der vorliegenden Erfindung liegt die Aufgabe zugrunde, ein Verfahren anzugeben, durch welches Speicherzugriffe außerhalb eines zulässigen Speicherbereiches erkannt und ausgewertet werden können.

Gelöst wird die Aufgabe ausgehend von den Merkmalen des Oberbegriffs des Patentanspruchs 1 durch dessen kennzeichnenden Merkmale.

Zum besseren Verständnis der Abläufe bei einer Abarbeitung eines Programmoduls in einer prozessorgesteuerten Einrichtung erscheint es erforderlich zunächst noch einmal auf bekannte Prinzipien näher einzugehen.

Bei einer Abarbeitung eines aus mehreren Funktionen bestehenden Programmoduls - im Sinne einzelner ablaufender funktionsindividueller Prozesse - durch den Prozessor wird in einem Speicher der Einrichtung für die aktuell abzuarbeitende Funktion ein prozeßindividueller Speicherbereich in einem durch das Betriebssystem der Einrichtung verwalteten Teil des Speichers reserviert. In diesem durch das Betriebssystem verwalteten Teil des Speichers werden infolge dessen den unterschiedlichen Prozessen zugeordnete prozeßindividuelle Speicherbereiche definiert, die in der Regel direkt nebeneinander im Speicher angeordnet sind. Die prozeßindividuellen Speicherbereiche sind jeweils in einen Header und einen Nutzdatenbereich untergliedert. Im Header wird im allgemeinen eine die jeweiligen Prozesse identifizierende eindeutige Prozeßidentifikation und die sogenannte Rücksprungadresse der den Prozeß initiierenden Funktion gespeichert. Der Nutzdatenbereich dient dem Zwischenspeichern von prozeßindividuellen Daten.

Ein im Rahmen eines Prozesses erfolgender Speicherzugriff des Prozessors auf den entsprechenden prozeßindividuellen Speicherbereich erfolgt mittels eines Zeigers der auf den Beginn des Nutzdatenbereiches des jeweiligen prozeßindividuellen Speicherbereiches zeigt, d.h. dieser Zeiger enthält die Adresse der ersten Speicherzelle des Nutzdatenbereiches des prozeßindividuellen Speicherbereiches. Zusätzlich ist ein sogenannter 'Offset' definiert, welcher zu der durch den Zeiger definierten Adresse addiert wird, und wodurch ein Zugriff auf die unterschiedlichen Speicherzellen des prozeßindividuellen Speicherbereiches ermöglicht wird.

Wird der 'Offset' - beispielsweise infolge einer falsch programmierten Schleife - falsch berechnet, erfolgt ein unberechtigter Speicherzugriff auf einen benachbarten prozeßindividuellen Speicherbereich. Durch einen derartigen unberechtigten Speicherzugriff werden beispielsweise falsche Daten aus dem Speicher ausgelesen bzw. Daten in eine falsche Speicherzelle im Speicher geschrieben. Dies führt mitunter zu einer Zerstörung der im Header eines prozeßindividuellen Speicherbereiches gespeicherten Informationen, so daß bei fehlender Prozeßidentifikation bzw. Rücksprungadresse eine Nachvollziehbarkeit des aufgetretenen Fehlers nicht mehr möglich ist.

Beim erfindungsgemäßen Verfahren werden im Zuge eines Reservierens eines prozeßindividuellen Speicherbereiches in den jeweiligen prozeßindividuellen Speicherbereichen signifikante - beispielsweise jeweils 4 Byte lange - Start- und Endesignaturen eingefügt. Beim Freigeben des prozeßindividuellen Speicherbereiches werden die aktuellen Start- und Endesignaturen jeweils mit den ursprünglich eingefügten Start- und Endesignaturen verglichen. Ein wesentlicher Vorteil des erfindungsgemäßen Verfahrens besteht darin, daß durch das Vergleichen der im Gegensatz zur gesamten Länge des prozeßindividuellen Speicherbereiches kurzen Start- und Endesignaturen mit hoher Wahrscheinlichkeit ein Speicherzugriff außerhalb eines zulässigen Speicherbereiches erkannt werden kann.

Ein weiterer Vorteil des erfindungsgemäßen Verfahrens besteht darin, daß durch ein Speichern einer eindeutigen Prozeßidentifikation bzw. der Rücksprungadresse der den Prozeß initiierenden Funktion in einem separaten schreibgeschützten Speicherbereich eine Zerstörung dieser Informationen durch einen unberechtigten bzw. fehlerhaften Speicherzugriff eines anderen Prozesses nicht mehr möglich ist.

Vorteilhafte Weiterbildungen der Erfindung sind in den Unteransprüchen angegeben.

Gemäß einer Weiterbildung der Erfindung wird die Startsignatur eines prozeßindividuellen Speicherbereiches beim Freigeben dieses prozeßindividuellen Speicherbereiches mit einer Freigabesignatur - beispielsweise mit dem Wert 0 - überschreiben. Vor einer Freigabe eines prozeßindividuellen Speicherbereiches wird geprüft, ob die Startsignatur gleich der Freigabesignatur ist. Ist dies der Fall, wurde der prozeßindividuelle Speicherbereich bereits durch einen anderen Prozeß freigegeben und eine erneute Freigabe wird unterbunden. Somit kann eine - beispielsweise durch Unterprozesse verursachte - mehrfache Freigabe eines prozeßindividuellen Speicherbereiches und ein damit verbundener Fehler in der Speicherverwaltung auf einfache Weise vermieden werden.

Ein weiterer Vorteil von in den Unteransprüchen definierten Ausgestaltungen der Erfindung besteht darin, daß durch ein Abspeichern und Übermitteln der üblicherweise im Header eines prozeßindividuellen Speicherbereich gespeicherten prozeßindividuellen Informationen - der Prozeßidentifikation und der Rücksprungadresse der den Prozeß initiierenden Funktion - an eine einrichtungsexterne Auswerteeinrichtung, eine Speicherüberwachung auch in Einrichtungen mit einer schwach ausgestatteten Steuereinrichtung z.B. einem Prozessor oder einem Microcontroller - ermöglicht wird.

Ein Ausführungsbeispiel der Erfindung wird im folgenden anhand der Zeichnung näher erläutert. Dabei zeigen:
- Fig. 1:: ein Strukturbild zur schematischen Darstellung der am erfindungsgemäßen Verfahren beteiligten wesentlichen Funktionseinheiten;
- Fig. 2:: ein Strukturbild zur schematischen Darstellung eines durch das Betriebssystem einer Kommunikationsanlage verwalteten Speichersegmentes;

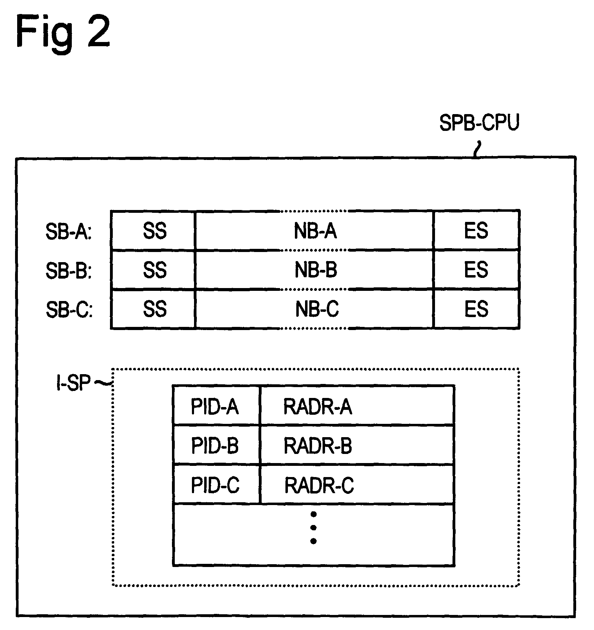

- Fig. 2:: ein Ablaufdiagramm zur Veranschaulichung der beim erfindungsgemäßen Verfahren ablaufenden wesentlichen Verfahrensschritte.

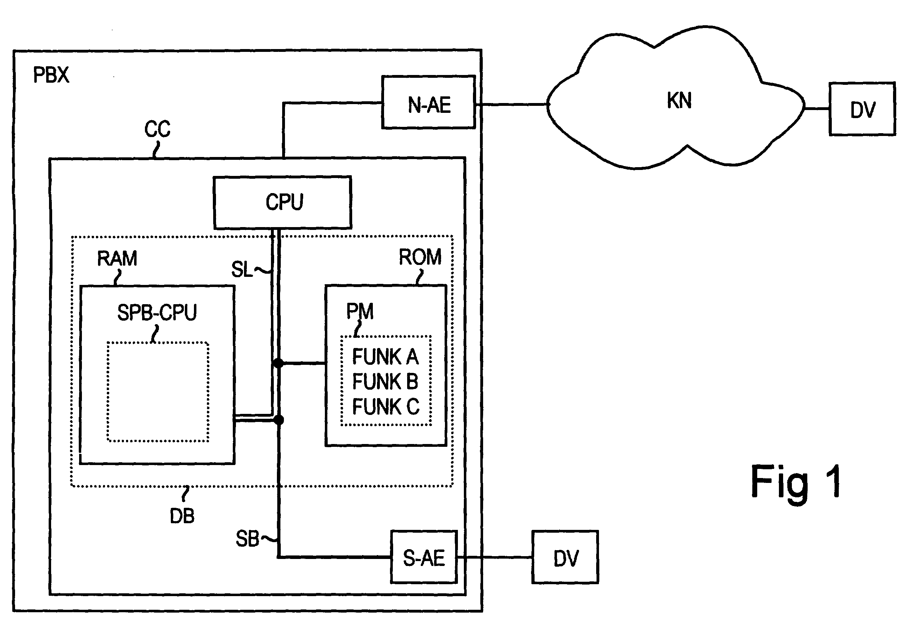

Fig. 1 zeigt in einer schematischen Darstellung eine Kommunikationsanlage PBX (Private Branche eXchange) mit einer zentralen Steuereinheit CC. In der zentralen Steuereinheit CC ist ein Steueraufgaben für die Kommunikationsanlage PBX übernehmender Prozessor CPU angeordnet, welcher eine Mehrzahl von - nicht dargestellten - Registern aufweist. Diese Register dienen zur Speicherung von im Rahmen einer Funktionsabarbeitung durch den Prozessor CPU zwischenzuspeichernden, funktionsindividuellen Daten.

Der Prozessor CPU ist über einen Systembus SB der Kommunikationsanlage PBX mit einer Datenbasis DB verbunden. Die Datenbasis DB weist einen flüchtigen Speicher - in der Literatur häufig mit RAM (Random Access Memory) abgekürzt - zur Speicherung von temporären Daten auf. Zusätzlich weist die Datenbasis DB einen nicht-flüchtigen Speicher - in der Literatur häufig mit ROM (Read Only Memory) abgekürzt - zur Speicherung des Betriebssystems der Kommunikationsanlage PBX und zur Speicherung von durch den Prozessor auszuführenden Programmen auf. Beim vorliegenden Ausführungsbeispiel sind im nichtflüchtigen Speicher ROM drei, einem Programmodul PM zugeordnete Funktionen FUNK A, FUNK B, FUNK C gespeichert. Zusätzlich ist der Prozessor CPU über eine Steuerleitung SL - in der Literatur häufig als 'Chip Select Leitung' bezeichnet - mit dem flüchtigen Speicher RAM verbunden.

Bei einer Abarbeitung der Funktionen FUNK A, FUNK B, FUNK C - im Sinne einzelner funktionsindividueller Prozesse - durch den Prozessor CPU werden in einem speziellen, fest definierten Speicherbereich - im weiteren mit Stapelspeicher bezeichnet - des flüchtigen Speichers RAM den jeweiligen Funktionen FUNK A, FUNK B, FUNK C zugeordnete Speicherbereiche - im weiteren als Stackframes bezeichnet - reserviert. Diese Stackframes dienen zur Zwischenspeicherung der in den Registern des Prozessors CPU hinterlegten funktionsindividuellen Daten und der Rücksprungadresse der jeweiligen Funktion. Die Rücksprungadresse gibt dabei diejenige Adresse an, bei der nach Beendigung der Abarbeitung einer Funktion eine Abarbeitung durch den Prozessor CPU fortgesetzt werden soll. Die Größe des reservierten Stackframes hängt dabei beispielsweise von der Art und der Anzahl der in einer Funktion FUNK A, FUNK B, FUNK C definierten lokalen Variablen ab. Nach einer Beendigung der Abarbeitung einer Funktion FUNK A, FUNK B, FUNK C durch den Prozessor CPU wird der, durch den jeweiligen Stackframe reservierte Speicherbereich des Stapelspeichers STACK für eine Reservierung durch andere Funktionen freigegeben.

Des weiteren werden bei einer Abarbeitung der Funktionen FUNK A, FUNK B, FUNK C - im Sinne einzelner funktionsindividueller Prozesse - in einem durch das Betriebssystem der Kommunikationsanlage PBX verwalteten Speicherbereich SPB-CPU des flüchtigen Speichers RAM weitere prozeßindividuelle Speicherbereiche reserviert. Die Organisation des durch das Betriebssystem der Kommunikationsanlage PBX verwalteten Speicherbereiches SPB-CPU wird unter Bezugnahme auf Fig. 2 näher erläutert.

Für eine Auswertung der im Rahmen einer Speicherüberwachung generierten Informationen ist die Kommunikationsanlage PBX mit einer anlagenexternen Auswerteeinrichtung DV - beispielsweise einem 'Personal Computer' verbunden. Die Informationen werden dabei von der Kommunikationsanlage PBX an die Auswerteeinrichtung DV übermittelt und durch diese ausgewertet. Auf diese Weise wird eine Speicherüberwachung auch in Einrichtungen mit einer schwach ausgestatteten Steuereinheit CC ermöglicht. Eine Verbindung der Kommunikationsanlage PBX mit der Auswerteeinrichtung DV erfolgt dabei direkt über eine System-Anschlußeinheit S-AE - beispielsweise ein V.24-Schnittstelle - der Steuereinheit CC der Kommunikationsanlage PBX. Alternativ können die Informationen über eine Netz-Anschlußeinheit N-AE der Kommunikationsanlage PBX und ein die Kommunikationsanlage PBX mit der Auswerteeinrichtung DV verbindendes Kommunikationsnetz KN an die Auswerteeinrichtung DV übermittelt werden.

Fig. 2 zeigt eine schematische Darstellung des durch das Betriebssystem der Kommunikationsanlage PBX verwalteten Speicherbereich SPB-CPU des flüchtigen Speichers RAM bei einer Abarbeitung des Programmoduls PM. Im folgenden wird davon ausgegangen, daß das Programmodul derart strukturiert ist, daß ausgehend von einer Funktion FUNK A eine Unterfunktion FUNK B und ausgehend von der Unterfunktion FUNK B eine weitere Unterfunktion FUNK C aufgerufen wird. Bei einer schrittweisen Abarbeitung der Funktionen FUNK A, FUNK B, FUNK C - im Sinne einzelner funktionsindividueller Prozesse - durch den Prozessor CPU der Kommunikationsanlage PBX wird in dem durch das Betriebssystem der Kommunikationsanlage PBX verwalteten Speicherbereich SPB-CPU des flüchtigen Speichers RAM jeweils ein prozeßindividueller Speicherbereich SB-A, SB-B, SB-C reserviert. Somit sind bei der vorliegenden Strukturierung des Programmoduls PM zum Zeitpunkt der Abarbeitung der weiteren Unterfunktion FUNK C drei prozeßindividuelle Speicherbereiche SB-A, SB-B, SB-C reserviert.

Die prozeßindividuellen Speicherbereiche SB-A, SB-B, SB-C sind jeweils in drei Untersegmente untergliedert. Jeder prozeßindividuelle Speicherbereich SB-A, SB-B, SB-C weist dabei eine signifikante Startsignatur SS, eine signifikante Endesignatur ES und einen Nutzdatenbereich NB-A, NB-B, NB-C zur temporären Speicherung von prozeßindividuellen Daten auf. Die Startsignatur SS und die Endesignatur ES weisen im vorliegenden Ausführungsbeispiel jeweils eine Länge von 4 Byte auf und enthalten jeweils die signifikante Bitfolge 0xA55A5AA5. Der Nutzdatenbereich NB-A, NB-B, NB-C hat eine variable Länge und entspricht dem für den jeweiligen Prozeß benötigten Speicherbedarf in dem durch das Betriebssystem der Kommunikationsanlage verwalteten Speicherbereich SPB-CPU des flüchtigen Speichers RAM. Die prozeßindividuellen Speicherbereiche SB-A, SB-B, SB-C liegen als jeweils zusammengehörige Speicherblöcke adressenabhängig hintereinander im flüchtigen Speicher RAM. Alternativ können sie aufgeteilt in mehrere Unterblöcke in dem durch das Betriebssystem der Kommunikationsanlage PBX verwalteten Speicherbereich SPB-CPU angeordnet sein.

Ein Speicherzugriff auf die Speicherzellen eines jeweiligen Nutzdatenbereiches NB-A, NB-B, NB-C erfolgt mittels eines prozeßindividuellen Zeigers - in der Literatur häufig als 'Pointer' bezeichnet - der auf den Beginn des Nutzdatenbereiches NB-A, NB-B, NB-C des jeweiligen prozeßindividuellen Speicherbereiches SB-A, SB-B, SB-C zeigt, d.h. dieser Zeiger enthält die Adresse der ersten Speicherzelle des Nutzdatenbereiches NB-A, NB-B, NB-C des prozeßindividuellen Speicherbereiches SB-A, SB-B, SB-C. Zusätzlich ist ein sogenannter 'Offset' definiert, welcher zu der durch den Zeiger definierten Adresse addiert wird und wodurch ein Zugriff auf die unterschiedlichen Speicherzellen des prozeßindividuellen Speicherbereiches SB-A, SB-B, SB-C ermöglicht wird. Dieser 'Offset' kann beispielsweise innerhalb einer programmierten Schleife dekrementiert bzw. inkrementiert werden, so daß ein Zugriff auf die einzelnen Speicherzellen eines prozeßindividuellen Speicherbereiches SB-A, SB-B, SB-C möglich ist.

Mit der Reservierung der prozeßindividuellen Speicherbereiche SB-A, SB-B, SB-C werden zusätzlich für jeden Prozeß prozeßindividuelle Informationen in einen weiteren Speicherbereich I-SP des durch das Betriebssystem der Kommunikationsanlage PBX verwalteten Speicherbereich SPB-CPU des flüchtigen Speichers RAM eingetragen. Die prozeßindividuellen Informationen umfassen dabei im wesentlichen eine eindeutige Prozeßidentifikation PID-A, PID-B, PID-C und eine prozeßindividuelle Rücksprungadresse RADR-A, RADR-B, RADR-C. Die prozeßindividuelle Rücksprungadresse RADR-A, RADR-B, RADR-C gibt dabei diejenige Adresse an, an der nach Beendigung der Abarbeitung einer Funktion FUNK A, FUNK B, FUNK C eine Abarbeitung durch den Prozessor CPU fortgesetzt werden soll. Im vorliegenden Ausführungsbeispiel gibt beispielsweise die Rücksprungadresse RADR-B der Unterfunktion FUNK B an, an welcher Adresse nach Beendigung der Abarbeitung der Unterfunktion FUNK B eine Abarbeitung der Funktion FUNK A fortgesetzt werden soll. Analog dazu gibt die Rücksprungadresse RADR-C der weiteren Unterfunktion FUNK C an, an welcher Adresse nach Beendigung der Abarbeitung dieser weiteren Unterfunktion FUNK C eine Abarbeitung der Unterfunktion FUNK B durch den Prozessor CPU fortgesetzt werden soll.

Die Ermittlung der jeweiligen prozeßindividuellen Rücksprungadresse RADR-A, RADR-B, RADR-C für eine Speicherung im weiteren Speicherbereich I-SP erfolgt mittels des Stapelspeichers in der Literatur häufig als 'Stack' bezeichnet. Wie bereits beschrieben wird beim Beginn der Abarbeitung einer Funktion FUNK A, FUNK B, FUNK C im Stapelspeicher ein funktionsindividueller Stackframe reserviert. Dieser Stackframe dient zur Zwischenspeicherung der in Registern des Prozessors CPU hinterlegten funktionsindividuellen Daten, wobei die Rücksprungadresse RADR-A, RADR-B, RADR-C einer Funktion FUNK A, FUNK B, FUNK C an einer definierten Steile im Stackframe gespeichert wird. Des weiteren ist in einer Speicherzelle des funktionsindividuellen Stackframes eine Information darüber gespeichert, an welcher Stelle der Zeiger für einen Zugriff auf den jeweiligen prozeßindividuellen Speicherbereich SB-A, SB-B, SB-C hinterlegt werden soll. Diese Informationen werden aus dem jeweiligen Stackframe mittels des sogenannten 'Stackpointers' ausgelesen und verarbeitet bzw. im weiteren Speicherbereich I-SP an entsprechender Stelle abgelegt.

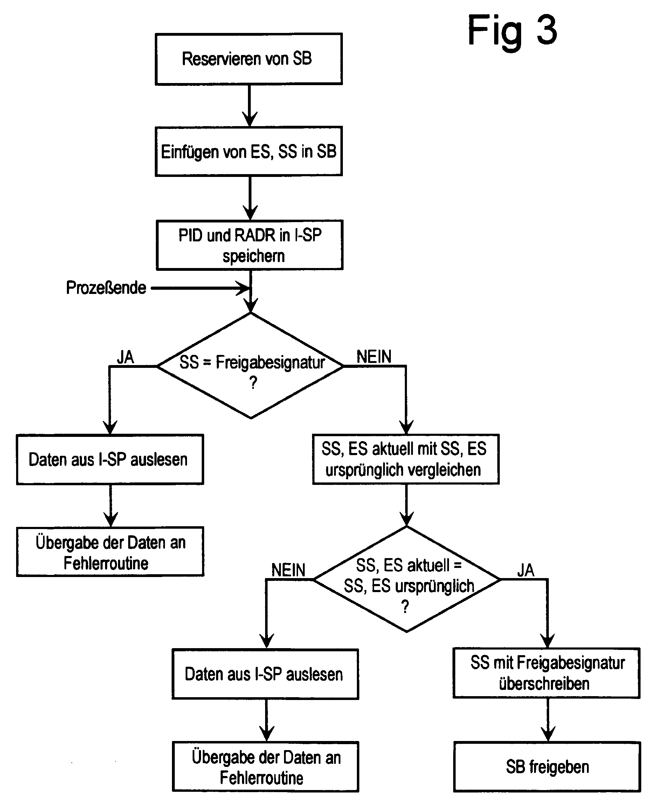

Fig 3 zeigt nun ein Ablaufdiagramm zur Veranschaulichung der beim erfindungsgemäßen Verfahren ablaufenden wesentlichen Verfahrensschritte.

Im Zuge einer Reservierung eines prozeßindividuellen Speicherbereiches SB-A, SB-B, SB-C wird in diesen prozeßindividuellen Speicherbereich SB-A, SB-B, SB-C jeweils eine signifikante Startsignatur SS und eine signifikante Endesignatur ES eingefügt. Die Startsignatur SS und die Endesignatur ES weisen im vorliegenden Ausführungsbeispiel jeweils eine Lange von 4 Byte auf und enthalten jeweils die signifikante Bitfolge 0xA55A5AA5. Zusätzlich wird - wie beschreiben - eine eindeutige Prozeßidentifikation PID-A, PID-B, PID-C und eine prozeßindividuelle Rücksprungadresse RADR-A, RADR-B, RADR-C im weiteren Speicherbereich I-SP gespeichert.

Der weitere Speicherbereich I-SP zur Speicherung der eindeutigen Prozeßidentifikation PID-A, PID-B, PID-C und der prozeßindividuellen Rücksprungadresse RADR-A, RADR-B, RADR-C ist für einen Zugriff durch andere Prozesse schreibgeschützt. Auf diese Weise wird ein Überschreiben dieser prozeßindividuellen Informationen durch einen fehlerhaften Speicherzugriff vermieden. Auf diese Weise ist sichergestellt, daß mittels dieser Informationen anschließend eine Nachvollziehbarkeit eines aufgetretenen Fehlers möglich ist. Ein Einspeichern bzw. Auslesen der Informationen aus dem weiteren Speicherbereich I-SP erfolgt durch eine Aktivierung einer den Prozessor CPU und den flüchtigen Speicher RAM verbindenden Steuerleitung SL - in der Literatur häufig als 'Chip Select Leitung' bezeichnet. Durch die Aktivierung dieser Steuerleitung SL wird ein bestimmter Bereich - der weitere Speicherbereich I-SP - des durch das Betriebssystem der Kommunikationsanlage PBX verwalteten Speicherbereiches SPB-CPU für einen Zugriff - einen Lese- bzw. Schreibzugriff - geöffnet.

Soll der prozeßindividuelle Speicherbereich SB-A, SB-B, SB-C, z.B. infolge einer Beendigung des zugehörigen Prozesses, freigegeben werden, wird vor der Freigabe überprüft, ob die aktuelle Startsignatur SS gleich einer definierten Freigabesignatur - beispielsweise gleich dem Wert 0 - ist. Ist dies der Fall, so wurde der prozeßindividuelle Speicherbereich SB-A, SB-B, SB-C unberechtigt bereits anderweitig - beispielsweise durch einen anderen Prozeß - freigegeben. Für eine spätere Auswertung dieses Fehlers werden die in dem weiteren Speicherbereich I-SP gespeicherten prozeßindividuellen Informationen - die Prozeßidentifikationen PID-A, PID-B, PID-C und die prozeßindividuellen Rücksprungadressen RADR-A, RADR-B, RADR-C - ausgelesen und an eine Fehlerroutine übergeben. Diese speichert die prozeßindividuellen Informationen für eine nachfolgende Bearbeitung in einer Speichereinrichtung - beispielsweise auf einer Festplatte oder einer sogenannten 'Flash-Karte' - der Kommunikationsanlage PBX ab.

Ist die Startsignatur SS ungleich der definierten Freigabesignatur, d.h. der prozeßindividuelle Speicherbereich SB-A, SB-B, SB-C wurde noch nicht freigegeben werden vor der Freigabe die aktuellen Start- bzw. Endesignaturen SS, ES jeweils mit den ursprünglich eingefügten Start- bzw. Endesignaturen SS, ES verglichen.

Sind die aktuellen Start- bzw. Endesignaturen SS, ES gleich den ursprünglich eingefügten Start- bzw. Endesignaturen SS, ES so liegt in der Regel kein unberechtigter bzw. fehlerhafter Speicherzugriff in Bezug auf diesen prozeßindividuellen Speicherbereich SB-A, SB-B, SB-C, d.h. ein Speicherzugriff außerhalb des Nutzdatenbereiches NB-A, NB-B, NB-C dieses prozeßindividuellen Speicherbereiches SB-A, SB-B, SB-C vor und die Startsignatur SS wird mit der eindeutigen Freigabesignatur überschrieben. Anschließend wird der prozeßindividuelle Speicherbereich SB-A, SB-B, SB-C für eine Reservierung durch einen nachfolgenden Prozeß freigegeben.

Wie bereits beschrieben erfolgt ein Speicherzugriff auf den prozeßindividuellen Speicherbereich SB-A, SB-B, SB-C mittels eines Zeigers, der auf den Beginn des Nutzdatenbereiches NB-A, NB-B, NB-C dieses prozeßindividuellen Speicherbereiches SB-A, SB-B, SB-C zeigt, und eines 'Offsets'. Dieser 'Offset' wird für einen Zugriff auf die einzelnen Speicherzellen des Nutzdatenbereiches NB-A, NB-B, NB-C beispielsweise innerhalb einer programmierten Schleife dekrementiert bzw. inkrementiert. Die Ursache für einen Speicherzugriff außerhalb des zugewiesenen Speicherbereiches, d.h. außerhalb des Nutzdatenbereiches NB-A, NB-B, NB-C liegt somit häufig in einer falsch programmierten Schleife, d.h. der 'Offset' wird um einen Wert zu hoch gezählt. Somit entfällt der überwiegende Teil der unzulässigen Speicherzugriffe auf die Randgebiete der benachbarten prozeßindividuelle Speicherbereiche SB-A, SB-B, SB-C. Durch einen jeweiligen Vergleich der am Anfang bzw. Ende eines prozeßindividuellen Speicherbereiches SB-A, SB-B, SB-C eingefügten aktuellen Start- bzw. Endesignatur SS, ES mit der ursprünglich eingefügten Start- bzw. Endesignatur SS, ES ist somit auf einfache Weise ein fehlerhafter Speicherzugriff erkennbar.

Ist eine der aktuellen Start- bzw. Endesignaturen SS, ES ungleich den ursprünglich eingefügten Start- bzw. Endesignatur SS, ES so liegt ein Speicherzugriff außerhalb des zugewiesenen Speicherbereiches vor. Infolgedessen werden die in dem weiteren Speicherbereich I-SP gespeicherten prozeßindividuellen Informationen - die Prozeßidentifikationen PID-A, PID-B, PID-C und die prozeßindividuellen Rücksprungadressen RADR-A, RADR-B, RADR-C - ausgelesen und an eine Fehlerroutine übergeben. Diese speichert die prozeßindividuellen Informationen für eine nachfolgende Bearbeitung in der Speichereinrichtung der Kommunikationsanlage PBX ab.

Für eine Auswertung der prozeßindividuellen Informationen werden diese von der Kommunikationsanlage PBX an die anlagenexterne Auswerteeinrichtung DV übermittelt. Die prozeßindividuellen Informationen werden dabei direkt über eine System-Anschlußeinheit S-AE der Steuereinheit CC der Kommunikationsanlage PBX an die Auswerteeinrichtung DV übermittelt. Alternativ können die Informationen über eine Netz-Anschlußeinheit N-AE der Kommunikationsanlage PBX und ein die Kommunikationsanlage PBX mit der Auswerteeinrichtung DV verbindendes Kommunikationsnetz KN an die Auswerteeinrichtung DV übermittelt werden. Durch die anlagenexterne Auswerteeinrichtung DV erfolgt eine Aktivierung bzw. Deaktivierung der Speicherüberwachung und ein Abruf der in der Speichereinrichtung gespeicherten prozeßindividuellen Informationen. Durch die zusätzlich zur Verfügung gestellte anlagenexterne Rechenleistung wird eine Speicherüberwachung auch in Einrichtungen mit einer nur schwach ausgestatteten Steuereinrichtung ermöglicht.

## Patentansprüche

1. Verfahren zum Erkennen von fehlerhaften Speicherzugriffen in einer prozessorgesteuerten Einrichtung (PBX), wobei für eine Realisierung eines Prozesses diesem in einem Speicher (RAM) der Einrichtung (PBX) ein prozeßindividueller Speicherbereich (SB-A, SB-B, SB-C) zugeordnet wird,
**dadurch gekennzeichnet**,
daß in den prozeßindividuellen Speicherbereich (SB-A, SB-B, SB-C) eine Startsignatur (SS) und eine Endesignatur (ES) eingefügt und prozeßindividuelle Informationen in einem weiteren Speicherbereich (I-SP) gespeichert werden, daß bei einem Freigeben des prozeßindividuellen Speicherbereiches (SB-A, SB-B, SB-C) die aktuell gespeicherten Signaturen (SS, ES) jeweils mit den ursprünglich eingefügten Signaturen (SS, ES) verglichen werden, und daß bei einer Nichtübereinstimmung die prozeßindividuellen Informationen aus dem weiteren Speicherbereich (I-SP) ausgelesen und an eine Fehlerroutine übergeben werden.

2. Verfahren nach Anspruch 1,
**dadurch gekennzeichnet**,
daß die prozeßindividuellen Informationen eine Prozeßidentifikation (PID) und eine Rücksprungadresse (RADR), an der eine Bearbeitung nach Beendigung des aktuellen Prozesses fortgesetzt wird, umfassen

3. Verfahren nach Anspruch 1 oder 2,
**dadurch gekennzeichnet**,
daß die Startsignatur (SS) beim Freigeben des prozeßindividuellen Speicherbereiches (SB-A, SB-B, SB-C) mit einer Freigabesignatur überschrieben wird.

4. Verfahren nach Anspruch 3,
**dadurch gekennzeichnet**,
daß vor einem Freigeben des prozeßindividuellen Speicherbereiches (SB-A, SB-B, SB-C) die Startsignatur (SS) mit der Freigabesignatur verglichen wird, und daß ein Freigeben des prozeßindividuellen Speicherbereiches (SB-A, SB-B, SB-C) nur in Fällen erfolgt, in denen die Startsignatur (SS) ungleich der Freigabesignatur ist.

5. Verfahren nach Anspruch 4,
**dadurch gekennzeichnet**,
daß in Fällen, in denen die Startsignatur (SS) mit der Freigabesignatur übereinstimmt, die prozeßindividuellen Informationen aus dem weiteren Speicherbereich (I-SP) ausgelesen und an die Fehlerroutine übergeben werden.

6. Verfahren nach einem der vorhergehenden Ansprüche,
**dadurch gekennzeichnet**,
daß die prozeßindividuellen Informationen durch ein Freischalten einer speziellen Adreßleitung (SL) des Speichers (RAM) in den weiteren Speicherbereich (I-SP) eingespeichert und/oder aus dem weiteren Speicherbereich (I-SP) ausgelesen werden.

7. Verfahren nach einem der vorhergehenden Ansprüche,
**dadurch gekennzeichnet**,
daß die Fehlerroutine die prozeßindividuellen Informationen in einem weiteren Speicher der Einrichtung (PBX) speichert.

8. Verfahren nach Anspruch 7,
**dadurch gekennzeichnet**,
daß die gespeicherten prozeßindividuellen Informationen für eine Auswertung von der Eirichtung (PBX) an eine einrichtungsexterne Auswerteeinrichtung (DV) übermittelt werden.

9. Verfahren nach Anspruch 8,
**dadurch gekennzeichnet**,
daß durch die anlagenexterne Auswerteeinrichtung (DV) eine Aktivierung und/oder Deaktivierung der Speicherüberwachung und ein Abruf der im weiteren Speicher gespeicherten prozeßindividuellen Informationen erfolgt.
